# EUROPÄISCHE PATENTSCHRIFT

(11) **EP 3 702 333 B1**
(45) Veröffentlichungstag und Bekanntmachung des Hinweises auf die Patenterteilung: **22.01.2025**
(21) Anmeldenummer: 19160395.0
(22) Anmeldetag: 01.03.2019
(51) Int. Cl.: C03B 37/012, C03B 19/06

(54) **VERFAHREN UND VORRICHTUNG ZUR HERSTELLUNG EINES GLASBAUTEILS**
METHOD AND DEVICE FOR PRODUCING A GLASS COMPONENT
PROCÉDÉ ET DISPOSITIF DE FABRICATION D'UN COMPOSANT DE VERRE

(43) Veröffentlichungstag der Anmeldung: 02.09.2020
(73) Patentinhaber: Heraeus Quarzglas GmbH & Co. KG, 63450 Hanau (DE)
(72) Erfinder: PLASS, Jaqueline, 63450 Hanau (DE); SCHÖNFELD, Dörte, 63450 Hanau (DE); SCHMITT, Clemens, 63450 Hanau (DE); LAAZ, Alexander, 63450 Hanau (DE); LANGNER, Andreas, 63450 Hanau (DE); SCHÖTZ, Gerhard, 63450 Hanau (DE); LEHMANN, Walter, 63450 Hanau (DE); HÜNERMANN, Michael, 63450 Hanau (DE); WEIDLICH, Stefan, 63450 Hanau (DE); SCHÄFER, Jürgen, 63450 Hanau (DE)
(74) Vertreter: Gille Hrabal Partnerschaftsgesellschaft mbB Patentanwälte

(56) Entgegenhaltungen:
- EP-A1- 2 261 182
- DE-A1- 3 521 119
- US-A1- 2004 005 127
- US-A1- 2004 031 290

## Beschreibung

### Technischer Hintergrund

Die Erfindung betrifft ein Verfahren zur Herstellung eines Glasbauteils, das mindestens teilweise aus dotiertem, insbesondere aus seltenerdmetalldotiertem SiO₂ besteht

Außerdem betrifft die Erfindung eine Vorrichtung zur Herstellung eines Glasbauteils.

Zum Erzeugen besonderer Eigenschaften wird Quarzglas mit anderen Substanzen dotiert. Bauteile aus dotiertem Quarzglas werden beispielsweise für die Herstellung von Armaturen und Bauteilen für die Halbleiterfertigung, von Faserverstärkern, Faserlasern, mikrostrukturierten optischen Fasern, passiven Fasern mit angepasster Kernbrechzahl oder angepassten Dämpfungseigenschaften, beispielsweise für die Telekommunikation, Filtergläsern oder für Sensormaterialien verwendet.

### Stand der Technik

Bei bekannten Verfahren zur Herstellung optischer Vorformen werden Ausgangskomponenten in ein Hüllrohr aus Quarzglas verbracht und zusammen mit diesem zu einer Vorform verschmolzen.

Ein derartiges "Hüllrohrverglasen" zur Herstellung einer Vorform für aktive optische Fasern ist beispielsweise in der US 8,720,230 B2 beschrieben. Dabei werden SiO₂-Pulver und ein Pulver aus einer Seltenerdmetallverbindung, die auch in löslicher Form vorliegen kann, beispielsweise als wasserlösliches Chlorid, mit Wasser oder Alkohol zu einem Schlicker vermischt. Um den gewünschten Brechungsindex einzustellen, können dem Schlicker Dotierstoffe wie GeO₂, P₂O₅, Al₂O₃ und/oder B₂O₃ zugesetzt werden. Der Schlicker wird getrocknet und zu Mischpulver aus SiO₂, Seltenerdmetall und Dotierstoff vermahlen. Das Mischpulver wird in ein Quarzglasrohr mit vertikal orientierter Längsachse eingefüllt, dessen unteres Ende mit einem Stopfen aus porösem Glas verschlossen ist. Zum Reinigen und Kalzinieren wird das Mischpulver bei einer Temperatur unterhalb des Verglasungsniveaus (beispielsweise bei ca. 1200°C) mit einem Sauerstoff, Helium, Chlor oder Fluor enthaltenden Gasstrom beaufschlagt, der durch den porösen Stopfen in den Innenraum eingeleitet wird. Abschließend wird das Gas aus dem Innenraum abgepumpt und das Mischpulver zusammen mit dem Quarzglasrohr bei einer Temperatur oberhalb des Verglasungsniveaus (vorzugsweise 2100°C) zonenweise verschmolzen und gleichzeitig zu einer ersten Vorform elongiert. Das verglaste Mischpulver bildet das Kernmaterial der Vorform und das Quarzglasrohr das Mantelmaterial.

Die so hergestellte erste Vorform wird in ein weiteres Quarzglashüllrohr montiert, gegebenenfalls mit weiteren Stäben, Rohren oder Vorformen, und der verbleibende Zwischenraum wird mit einem zweiten SiO₂-Pulver, das auch dotiert sein kann, aufgefüllt. Anschließend wird der Innenraum des Quarzglashüllrohres unter Vakuum gesetzt und die gesamte Packung unter Bildung einer zweiten Vorform gesintert und verglast oder direkt zu einer optischen Faser verzogen.

Die US 2004/0005127 A1 beschreibt ein Verfahren zur Herstellung einer Vorform für seltenerdmetall-dotierte Fasern. Die Vorform wird aus einem Bündel von Glasstäben erzeugt, das in ein dünnwandiges Quarzglasrohr eingesetzt wird, das als zweites Mantelrohr der Vorform dient. Beide Enden des Mantelrohres werden mit porösen Stopfen aus Glaswolle verschlossen. Die Glaswolle-Stopfen liegen an den Stirnseiten des Glasstabbündels an und verhindern eine seitliche Verlagerung. Das Glasstabbündel wird in dem Mantelrohr einer Reinigungs- und Trocknungsbehandlung unterzogen und anschließend wird das Mantelrohr kollabiert.

### Technische Aufgabenstellung

Bei Vorbehandlungen des Zwischenprodukts im Hüllrohr mit inertem oder reaktivem Behandlungsgas wird das Hüllrohr mit dem Behandlungsgas geflutet und das Zwischenprodukt dabei der Behandlungs-Atmosphäre ausgesetzt.

Dabei kann es vorkommen, dass das Behandlungsgas bevorzugte Strömungspfade findet, so dass sich im Zwischenprodukt "Totbereiche" bilden, die nicht oder vergleichsweise wenig mit dem Behandlungsgas beaufschlagt werden. Eine homogene Vorbehandlung, wie beispielsweise eine vollständige Reinigung, ist daher nicht garantiert. Dies gilt insbesondere bei Leerraum in der Hüllrohr-Innenbohrung und bei Zwischenprodukten mit großem Porenvolumen.

Beim Sintern oder Verglasen des Zwischenprodukts beim Hüllrohrverglasen ist das Anlegen eines Unterdrucks sinnvoll, um den Einschluss von Blasen im schmelzenden Glas zu unterbinden. Außerdem schrumpft das poröse Zwischenprodukt beim Sintern oder Verglasen deutlich, wodurch sich Hohlräume bilden können.

Es hat sich gezeigt, dass dabei das Hüllrohr örtlich unkontrolliert einfallen (kollabieren) kann und dadurch das Zwischenprodukt ungewollt verformt wird und Gase eingeschlossen werden, so dass die erhaltene Vorform oder Faser nichtreproduzierbare Eigenschaften aufweist. Mit zunehmendem Hüllrohr-Durchmesser nimmt diese Problematik zu.

Der Erfindung liegt daher die Aufgabe zugrunde, ein Verfahren anzugeben, mit dem ein Hohlräume enthaltendes Zwischenprodukt einer in ihrer Wirkung reproduzierbaren und gleichmäßigen thermischen und/oder reaktiven Behandlung unterzogen werden kann.

Außerdem liegt der Erfindung die Aufgabe zugrunde, eine Vorrichtung bereitzustellen, mittels der eine thermische und/oder reaktive Behandlung eines Hohlräume enthaltenden Zwischenprodukts in einem Hüllrohr zuverlässig und mit reproduzierbarem Ergebnis ausgeführt werden kann.

### Zusammenfassung der Erfindung

Diese Aufgabe wird hinsichtlich des Verfahrens durch ein Verfahren mit den Merkmalen von Anspruch 1 gelöst.

Das nach dem erfindungsgemäßen Verfahren hergestellte Glasbauteil besteht mindestens teilweise aus dotiertem, insbesondere aus Seltenerdmetall-dotiertemSiO₂ (im Folgenden auch als "dotiertes Quarzglas" bezeichnet). Das dotierte Quarzglas enthält mindestens einen Dotierstoff. Das Glasbauteil wird unter Einsatz eines Zwischenprodukts aus natürlich vorkommendem bevorzugt aber synthetisch erzeugtem SiO₂-Rohstoff erzeugt.

Beim erfindungsgemäßen Verfahren wird entweder ein Zwischenprodukt weiterverarbeitet, das vorab dotierten SiO₂-Rohstoff enthält. In diesem Fall bewirkt die durchzuführende thermische Behandlung mindestens ein Sintern oder Verglasen des Zwischenprodukts; sie kann aber auch zum Einbringen eines weiteren Dotierstoffs dienen.

Oder beim erfindungsgemäßen Verfahren wird ein Zwischenprodukt weiterverarbeitet, das einen nicht dotierten SiO₂-Rohstoff enthält. In diesem Fall dient die durchzuführende thermische Behandlung zum Einbringen von mindestens einem Dotierstoff über die Gasphase in das Zwischenprodukt, und sie dient zum anschließenden Sintern oder Verglasen des so dotierten Zwischenprodukts.

Mindestens ein hier als "Gasdiffusor" bezeichnetes Bauteil befindet sich in der Hüllrohr-Innenbohrung in direktem oder mittelbarem Kontakt (Kontakt über ein Zwischenelement) mit dem Zwischenprodukt. Er ist porös, so dass ein Gastransport durch den Gasdiffusor entlang der Hüllrohr-Längsachse möglich ist. Er besteht beispielsweise aus Glas mit offener Porosität oder aus verpressten und/oder gesinterten Teilchen, wie beispielsweise einer Glasfritte. Vorteilhafterweise hat der Gasdiffusor eine gleiche oder ähnliche Porosität wie das Zwischenprodukt, aber eine geringere Schrumpfung bei Temperaturerhöhung.

Er kann in Strömungsrichtung eines anströmenden Gases vor dem Zwischenprodukt angeordnet sein, so dass er zu einer örtlichen und zeitlichen gleichmäßigeren Gasverteilung am und im Zwischenprodukt und so zu einer homogeneren Einwirkung des Gases auf das Zwischenprodukt und einer reproduzierbareren Qualität des Zwischenprodukts beiträgt. Außerdem stabilisiert der Gasdiffusor die örtliche Position und die Form des Zwischenprodukts, indem er verhindert oder vermindert, dass bei der thermischen Behandlung Partikel des SiO₂-Rohstoffs durch Gasströmungen oder beim Evakuieren mitgerissen oder verlagert werden oder dass das erweichte Zwischenprodukt in unerwünschter Weise plastisch verformt wird.

Dazu trägt auch bei, dass der Gasdiffusor entlang der Hüllrohr-Längsachse bewegbar ist und bei der thermischen Behandlung gegen ein Ende des Zwischenprodukts gepresst wird. Der Gasdiffusor ermöglicht somit einerseits die Übertragung der Presskraft auf das Zwischenprodukt und andererseits lässt er aufgrund seiner Gasdurchlässigkeit sowohl ein Entgasen als auch ein Begasen des Zwischenprodukts zwecks Dotierung oder Reinigung zu.

Das Zwischenprodukt liegt dabei an einem Widerlager an. Das Widerlager ist in der Regel ein örtlich fixiertes Lager; es kann aber auch ein örtlich variables Lager sein. Bei der thermischen Behandlung erfährt das poröse Zwischenprodukt in der Regel eine Längenverkürzung in Richtung der Hüllrohr-Längsachse, beispielsweise infolge einer Volumenabnahme (Schwindung) oder durch Verformung. Die sich verkürzende Abmessung wird im Folgenden auch als "Länge" des Zwischenprodukts bezeichnet. Dabei können Spalten bzw. größere Hohlräume im Aufbau entstehen, die zu einem unkontrollierten Einfallen des Hüllrohres führen können, wodurch sich Hohlräume mit darin eingeschlossenen Gasen bilden können und das Zwischenprodukt ungewollt verformt wird. Der Gasdiffusor wird entsprechend der Verkürzung des Zwischenprodukts in Richtung der Hüllrohr-Längsachse nachgeführt. Diese Nachführung kann bei einer ersten vorteilhaften Verfahrensvariante durch externe Regelung oder Steuerung erfolgen, und bei einer anderen vorteilhaften Verfahrensvariante erfolgt sie automatisch durch die Längenverkürzung bei der thermischen Behandlung selbst, indem die Nachführung des Gasdiffusors durch Gewichtskraft und/oder durch eine mechanische Vorspannung bewirkt wird.

Es wird eine Presskraft mittels einer Spannvorrichtung erzeugt, die unmittelbar oder mittelbar - über ein bewegliches Zwischenelement, wie beispielsweise ein Fixierungselement auf den ersten Gasdiffusor und das Zwischenprodukt einwirkt.

Bei einer ersten Verfahrensvariante umfasst die Spannvorrichtung ein in der Hüllrohr-Innenbohrung eingesetztes, elastisch verformbares Federelement, beispielsweise einen Faltenbalg oder elastisch verformbare Federn, jeweils aus einem temperaturfesten Kunststoff oder Metall wie Hastelloy, aus Keramik oder aus Quarzglas. Das Federelement übt in Abhängigkeit seiner aktuellen Federkraft die Presskraft auf den axial-beweglichen Gasdiffusor unmittelbar oder mittelbar - über ein längsbewegliches Zwischenelement, wie beispielsweise ein Fixierungselement - aus, so dass dieser bei jeder Längenverkürzung des Zwischenprodukts in Richtung auf das Zwischenprodukt nachgeschoben wird und dieses dadurch stabilisiert. Das Nachschieben des Gasdiffusors mittels Federelement wird durch die Schrumpfung der Komponenten im Hüllrohr infolge der thermischen Behandlung gesteuert und bedarf keines externen Eingriffs.

Bei einer anderen Verfahrensvariante umfasst die Spannvorrichtung einen in der Hüllrohr-Innenbohrung verschiebbaren Schieber mit einem ersten Magnetelement aus einem magnetischen Werkstoff, und ein in Längsachsenrichtung außerhalb der Hüllrohr-Innenbohrung bewegbares und auf das Magnetelement einwirkendes zweites Magnetelement.

Bei dem zweiten Magnetelement handelt es sich beispielsweise um einen Permanentmagneten oder um eine stromdurchflossene Spule. Der Schieber übt - getrieben von der Bewegung des zweiten Magnetelements - eine Presskraft auf den axial-beweglichen Gasdiffusor unmittelbar oder mittelbar - über ein längsbewegliches Zwischenelement, wie beispielsweise ein Fixierungselement - aus. Der Betrag der Presskraft ist mittels einer Vorschub-Steuerung oder -Regelung der äußeren Spule einstellbar; er ist beispielsweise konstant oder bei Bedarf veränderbar. Bei dieser Verfahrensvariante können mittels des steuer- oder regelbaren Vorschubs von zweitem Magnetelement und Schieber besonders hohe und in ihrem Betrag variable Druckkräfte auf das Zwischenprodukt ausgeübt werden. Das erste Magnetelement ist vorzugsweise in einer Kapsel aus dielektrischem Werkstoff verschlossen, um Verunreinigungen zu vermeiden. Der Schieber ist so auszulegen, dass er die axiale Gasströmung im Hüllrohr nicht verhindert. Vorzugsweise wirkt die Presskraft während der thermischen Behandlung ohne Unterbrechung (permanent) in Richtung der Hüllrohr-Längsachse auf das Zwischenprodukt ein. Der Betrag der Presskraft ist dabei variabel oder konstant.

Durch Einsatz der Spanvorrichtung können auch bei horizontal orientierter Hüllrohr-Längsachse hohe Presskräfte aufgebracht werden, die die Ausbildung von Blasen im Zwischenprodukt vermindern oder diese sogar entfernen können.

Damit der Gasdiffusor während der thermischen Behandlung seine Form behält, besteht er vorzugsweise aus einem porösen Glas, das auch bei hohen Behandlungstemperaturen, wie etwa zwischen 900°C und 1400°C, eine höhere Viskosität hat als der SiO-Rohstoff. Quarzglas erfüllt in der Regel diese Bedingung und es enthält zudem keine schädlichen Verunreinigungen. Das Quarzglas ist vorzugsweise nicht dotiert oder es enthält Dotierstoffe in geringerer Konzentration als das dotierte oder nicht dotierte SiO₂.

Um die Ausbildung bevorzugter Gasströmungspfade um das Zwischenprodukt herum möglichst zu unterbinden, den Verlust an Zwischenprodukt-Material durch Gasströmung und Evakuierung zu minimieren und unerwünschten plastischen Verformungen entgegenzuwirken, füllt der Gasdiffusor die Innenquerschnittsform des Hüllrohres anfänglich möglichst vollständig aus.

Andererseits ist es im Hinblick auf einen geringen Materialverlust vorteilhaft, wenn sich nach Abschluss der thermischen Behandlung die Außenkonturen des behandelten Zwischenprodukts und des Gasdiffusors möglichst wenig unterscheiden. Da das Zwischenprodukt infolge der thermischen Behandlung schrumpft und eine finale Produkt-Außenkontur einnimmt, und der Gasdiffusor infolge der thermischen Behandlung ebenfalls schrumpft und eine finale Gasdiffusor-Außenkontur einnimmt, wird vorzugsweise ein Gasdiffusor eingesetzt, der vor Durchführung der thermischen Behandlung eine Außenquerschnittsform hat, die unter Berücksichtigung der Schrumpfungen von Zwischenprodukt und Gasdiffusor so ausgelegt ist, dass die finale Produkt-Außenkontur und die finale Gasdiffusor-Außenkontur im Wesentlichen übereinstimmen, beispielsweise +/- 10% bezogen auf die größte radiale Außenkontur-Abmessung. Im einfachsten Fall sind die jeweiligen anfänglichen Außenkonturen sowie die Gesamt-Schwindungen von Zwischenprodukt und Gasdiffusor gleich.

Bei einer Verfahrensweise, bei der der Gasdiffusor beim Verglasen eine geringere Schrumpfung erfährt als das Zwischenprodukt wird vorzugsweise ein Gasdiffusor eingesetzt, der vor Durchführung der thermischen Behandlung eine Außenkontur hat, die mit der anfänglichen Hüllrohr-Innenkontur im Wesentlichen übereinstimmt, beispielsweise unter Belassung eines Spaltmaßes von weniger als 2 mm. Diese Verfahrensweise hat sich beispielweise bewährt, wenn die thermische Behandlung mit einer Dotierung des Zwischenprodukts durch Behandlung mit einem gasförmigen Dotierstoff, wie etwa mit Fluor oder Chlor, einhergeht. Dabei wird zu Gunsten eines möglichst engen Spaltmaßes und der Vermeidung von unkontrollierbaren Strömungspfaden und damit auch einer inhomogenen Dotierstoffverteilung in Kauf genommen, dass sich die finale Produkt-Außenkontur und die finale Gasdiffusor-Außenkontur unterscheiden, genauer: dass die finale Produkt-Außenkontur einen größeren Umkreis hat als die finale Gasdiffusor-Außenkontur.

Im Hinblick auf eine möglichst gleichmäßige Einwirkung von strömendem Gas auf das Zwischenprodukt und zur Vermeidung bevorzugter Gasströmungspfade um den Außenumfang des Zwischenprodukts herum hat es sich außerdem als günstig erwiesen, wenn das Zwischenprodukt als Sootkörper, Sinterkörper oder Pressling ausgebildet ist und eine Außenquerschnittsform hat, die eine Innenquerschnittsform des Hüllrohres unter Belassung eines Spaltes mit einem Spaltmaß von 1 mm oder weniger ausfüllt.

Bei einer Innenbohrung und einem zylinderförmigen Zwischenprodukt mit kreisrundem Querschnitt ist der nominale Innendurchmesser der Innenbohrung geringfügig größer und im Grenzfall auch gleich groß wie der nominale Außendurchmesser des Zwischenprodukts.

Im Fall eines Zwischenprodukts in Form eine Schüttung aus Partikeln ist das Hüllrohr mit der Schüttung so aufgefüllt, dass möglichst keine Hohlräume verbleiben, wobei die Schüttung möglichst dicht in das Hüllrohr eingepresst wird.

Die erläuterten Wirkungen beziehen sich auf den Einsatz eines ersten Gasdiffusors, der in Strömungsrichtung eines Behandlungsgases gesehen, dem Zwischenprodukt vorgeordnet ist. Sie werden verstärkt bei einer Verfahrensweise unter Einsatz eines zweiten gasdurchlässigen Gasdiffusors, der in Strömungsrichtung des Behandlungsgases dem Zwischenprodukt nachgeordnet ist. Das Zwischenprodukt ist gegebenenfalls zwischen dem ersten Gasdiffusor und dem zweiten gasdurchlässigen Gasdiffusor angeordnet. Bei der thermischen Behandlung presst der erste Gasdiffusor gegen das eine Ende des Zwischenprodukts und der zweite Gasdiffusor gegen das gegenüberliegende, andere Ende. Zum Aufbringen der Presskraft ist es nicht erforderlich, dass auch der zweite Gasdiffusor in Richtung der Hüllrohr-Längsachse bewegt wird; er bildet ein Widerlager, an dem das Zwischenprodukt anliegt. Ansonsten gilt für den zweiten Gasdiffusor das bezüglich geometrischer Gestalt, chemischer Zusammensetzung, Funktion und Schrumpfungsverhalten zum ersten Gasdiffusor Gesagte. Im einfachsten Fall werden erster und zweiter Gasdiffusor anhand desselben Fertigungsverfahrens hergestellt und sind hinsichtlich Form, Porosität und Werkstoff gleich.

Die beidseitig am Zwischenprodukt anliegenden Gasdiffusoren stabilisieren das Zwischenprodukt und verhindern beispielsweise, dass bei einer thermischen Behandlung unter Vakuum loses oder aufgeschmolzenes, niedrigviskoses Material des Zwischenprodukts unkontrolliert durch das Hüllrohr gezogen wird und dabei vorhandene Gaskanäle verstopfen kann, so dass bei der thermischen Behandlung entstehende Gase nicht mehr abgesaugt werden können.

Vorteilhafterweise sind der erste Gasdiffusor und der zweite Gasdiffusor zylinderförmig ausgeführt sind und haben jeweils eine am Zwischenprodukt anliegende plane Stirnseite.

Bei einer weiteren vorteilhaften Verfahrensausgestaltung wird in die Hüllrohr-Innenbohrung ein erstes Fixierungselement eingesetzt, in dem oder an dem mindestens ein durchgehender Gaskanal ausgebildet ist und das entlang der Hüllrohr-Längsachse verschoben und gegen den Gasdiffusor gepresst wird.

Das in die Hüllrohr-Innenbohrung eingesetzte Fixierungselement liegt unmittelbar oder mittelbar (über ein weiteres Zwischenelement) am Gasdiffusor an und überträgt eine Presskraft auf diesen. Es verfügt über mindestens einen in axialer Richtung durchgängigen Gaskanal, so dass es eine Gasströmung durch die Hüllrohr-Innenbohrung nicht verhindert. Im Gegensatz zum Gasdiffusor besteht es aber vorzugsweise aus einem vollständig dichten Werkstoff, beispielsweise aus Glas; und vorzugsweise aus Quarzglas, das aus synthetisch erzeugten Rohstoffen hergestellt worden ist. Das Fixierungselement schließt den porösen Gasdiffusor insoweit teilweise nach außen hin ab, stabilisiert ihn und trägt damit auch dazu bei, das Zwischenprodukt in seiner vorgegebenen axialen Position zu halten. Außerdem wird es auch bei einem Aufbringen der Presskraft auf kleiner Anpressfläche nicht so leicht beschädigt wie das poröse Gasdiffusor-Material, wie etwa eine Glasfritte. Andererseits bewahrt der Gasdiffusor das Fixierelement davor, dass beim Sintern oder Verglasen viskoses oder mittels Gasströmung oder Evakuierung bewegtes Material aus dem Zwischenprodukt in den Gaskanal oder in die Gaskanäle des Fixierungselements gelangt und diese dadurch verstopft.

Das Fixierungselement übt auch eine stabilisierende Wirkung auf das Hüllrohr aus; insbesondere wirkt es bei einer thermischen Behandlung bei hoher Temperatur und unter Vakuum einem vorzeitigen Kollabieren des Hüllrohres entgegen.

Der mindestens eine Gaskanal verläuft vollständig innerhalb des Fixierungselements, beispielsweise als Durchgangsbohrung, oder er ist als durchgehender Zwischenraum zwischen der Fixierungselement-Außenwandung und Hüllrohr-Innenwandung ausgebildet, beispielsweise als Längsnut in als oder Anfasung an der Außenwandung.

Die Außenquerschnittsform des Fixierungselements ist an die Innenquerschnittsform des Hüllrohres vorzugsweise so angepasst, dass ein Spalt mit einer möglichst geringen Spaltweite verbleibt, beispielsweise mit einem Spaltmaß von weniger als 2 mm. Das Fixierungselement besitzt beispielsweise einen Umkreis, der an den Inkreis des Hüllrohres entsprechend angepasst ist. Als Inkreis wird hier der größte, vollständig innerhalb der Hüllrohr-Innenbohrung liegende Kreis verstanden. Die Außenquerschnittsformen von Gasdiffusor und Fixierungselement sind beispielsweise gleich.

So wie für die Außenquerschnittsform für den Gasdiffusor erläutert, ist es auch für das Fixierungselement im Hinblick auf einen geringen Materialverlust vorteilhaft, wenn sich nach Abschluss der thermischen Behandlung die Außenkonturen des behandelten Zwischenprodukts und des Fixierungselements möglichst wenig unterscheiden. Dabei ist zu beachten, dass der mindestens eine Gaskanal bei der thermischen Behandlung vollständig oder teilweise kollabieren kann. Somit nimmt nicht nur das Zwischenprodukt infolge der thermischen Behandlung eine kleinere finale Produkt-Außenkontur ein, sondern auch das Fixierungselement schrumpft infolge der thermischen Behandlung und nimmt eine kleinere finale Fixierungselement-Außenkontur ein. Daher wird vorzugsweise ein Fixierungselement eingesetzt, das vor Durchführung der thermischen Behandlung eine Außenquerschnittsform hat, die unter Berücksichtigung der Schrumpfungen von Zwischenprodukt und Fixierungselement so ausgelegt ist, dass die finale Produkt-Außenkontur und die finale Fixierungselement-Außenkontur möglichst übereinstimmen; beispielsweise +/- 10% bezogen auf die größte radiale Abmessung.

Im einfachsten Fall sind die anfänglichen Außenkonturen sowie die Gesamt-Schwindungen von Zwischenprodukt und Fixierungselement gleich.

Es hat sich auch als günstig erwiesen, wenn das Fixierungselement eine Durchgangsbohrung und eine dem Gasdiffusor zugewandte plane erste Stirnseite aufweist, in der von der Durchgangsbohrung ausgehend Gasverteilungsrillen eingelassen sind, um die Gasströmungsverhältnisse im Hüllrohr zu beeinflussen.

Bei einer weiteren bevorzugten Ausgestaltung des Verfahrens ist in Verbindung mit einem zweiten Gasdiffusor auch ein zweites Fixierungselement vorgesehen. Dabei ist das erste Fixierungselement in Strömungsrichtung eines Behandlungsgases gesehen dem ersten Gasdiffusor vorzugsweise vorgeordnet, und das zweite Fixierungselement in der Strömungsrichtung dem zweiten Gasdiffusor nachgeordnet und liegt an diesem an.

Gegebenenfalls liegen das erste Fixierungselement, der erste Gasdiffusor, das zu behandelnde Zwischenprodukt, der zweite Gasdiffusor und das zweite Fixierungselement in dieser Reihenfolge stoßweiseaneinander.

Die stoßweise Anordnung über planparallele Kontaktflächen bewirkt eine bessere Temperaturhomogenität, insbesondere über die Kontaktflächen hinweg.

Vorteilhafterweise sind das erste Fixierungselement und das zweite Fixierungselement zylinderförmig ausgeführt und haben plane Stirnseiten, mit denen sie an einer planen Stirnseite des jeweils zugeordneten Gasdiffusors anliegen.

Das für das erste Fixierungselement bezüglich geometrischer Gestalt, chemischer Zusammensetzung, Funktion und Kollabierverhalten Gesagte gilt auch für das zweite Fixierungselement.

Bei einer vorteilhaften Verfahrensweise ist vorgesehen, dass an einem Hüllrohr-Ende ein Unterdruck in der Hüllrohr-Innenbohrung angelegt wird und/oder an einem gegenüberliegenden Hüllrohr-Ende ein Behandlungsgas in das Hüllrohr eingeleitet wird.

Dabei kann das Zwischenprodukt beispielsweise dem vom einen stirnseitigen Hüllrohr-Ende her eingeleiteten Behandlungsgas ausgesetzt werden, und gleichzeitig das verbrauchte oder mit Verunreinigungen beladene Behandlungsgas über das andere stirnseitige Hüllrohr-Ende aus dem Zwischenprodukt abgezogen werden. Beim Sintern oder Verglasen des Zwischenprodukts wird im Hüllrohr ein Unterdruck erzeugt und aufrechterhalten, aber kein Behandlungsgas zugeführt. Durch den Unterdruck in Verbindung mit dem Pressdruck können auch bei horizontal orientierter Hüllrohr-Längsachse Blasen aus dem porösen Zwischenprodukt entfernt werden.

Vorteilhafterweise wird das Zwischenprodukt zur thermischen Behandlung in einem elektrisch beheizten Ringofen erhitzt.

Im Vergleich zum Erhitzen mittels gasbetriebener Heizbrenner ist mit einem elektrisch beheizten Ringofen eine lange Heizzone einfach realisierbar, innerhalb der Innen-Komponenten des Hüllrohres einer hohen Temperatur ausgesetzt sind. Dadurch sind eine gleichmäßigere Wärmeabstrahlung und eine bessere Wärmeverteilung erreichbar. Dies erlaubt eine thermische Behandlung von größeren Hüllrohren und damit eine Erhöhung der Ausbringungsmenge.

Die oben genannte technische Aufgabe wird hinsichtlich der Vorrichtung erfindungsgemäß durch ein Vorrichtung mit den Merkmalen von Anspruch 12 gelöst.

Die Vorrichtung ist insbesondere zur Durchführung des erfindungsgemäßen Verfahrens geeignet. Das zum Verfahren Gesagte gilt gleichermaßen für die Vorrichtung. Vorteilhafte Ausgestaltungen der Vorrichtung ergeben sich aus den Unteransprüchen. Soweit in den Unteransprüchen angegebene Ausgestaltungen der Vorrichtung den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen.

### Definitionen

Einzelne Verfahrensschritte und Begriffe der vorliegenden Beschreibung werden im Folgenden ergänzend definiert. Die Definitionen sind Bestandteil der Beschreibung der Erfindung. Bei einem inhaltlichen Widerspruch zwischen einer der folgenden Definitionen und der übrigen Beschreibung ist das in der Beschreibung Gesagte maßgeblich.

### Dotiertes oder nicht dotiertes SiO₂- Quarzglas

Nicht dotiertes SiO₂ wird infolge der thermischen Behandlung mit mindestens einem Dotierstoff versetzt. Das bereits anfänglich mit mindestens einem Dotierstoff versetzte SiO₂ besteht aus SiO₂, das den Dotierstoff enthält und/oder er enthält SiO₂-Partikel, die mit Pulver des Dotierstoffs oder der Dotierstoffe vermischt sind; es kann bei der thermischen Behandlung mit mindestens einem weiteren Dotierstoff versetzt werden. Unter Quarzglas wird hier hochkieselsäurehaltiges Glas mit einem SiO₂-Anteil von mindestens 90 mol.-% verstanden.

### Dotierung

Die Dotierung besteht aus einem Dotierstoff oder aus mehreren Dotierstoffen. Der "Dotierstoff" umfasst mindestens eine Substanz, die dem Glas zur Erzielung gewünschter Eigenschaften absichtlich hinzugefügt wird, wie beispielsweise Seltenerdmetall und/oder andere Dotierstoffe. Zu den Seltenerdmetallen gehören die Elemente Scandium, Yttrium und Lanthan und die Lanthanoide. Zu den anderen Dotierstoffen gehören beispielsweise etwa Fluor, Chlor, P, Al, Ge, Ga, Cs, K, B, Li, F, Cl, Fe, Ni, Co, Cr, Mn, Ti und V.

### Thermische Behandlung

Sie umfasst Verfahrensschritte bei erhöhter Temperatur zum Zweck des Sinterns (Verdichtens), Verglasens (Schmelzens), Reinigens oder Dotierens des Zwischenprodukts.

Mit "Sintern" oder "Verdichten" wird hier eine Behandlung bei erhöhter Temperatur von mehr als 1100 °C bezeichnet, die zu einem Glasbauteil aus opakem, nicht transparentem Glas, insbesondere Quarzglas führt.

Durch "Verglasen" oder "Schmelzen" wird ein Glasbauteil aus dichtem, transparentem Glas, insbesondere Quarzglas erhalten.

Bei einer "Reinigung" wird der Gehalt an Verunreinigungen im Zwischenprodukt verringert. Die Hauptverunreinigungen sind OH-Gruppen, kohlenstoffhaltige Verbindungen, Übergangsmetalle, Alkalimetalle und Erdalkalimetalle, die aus dem Einsatzmaterial stammen oder durch die Prozessierung eingetragen werden. Das Reinigen umfasst eine Behandlung bei hoher Temperatur (> 800°C) unter chlorhaltiger, fluorhaltiger und/oder sauerstoffhaltiger Atmosphäre.

Das "Dotieren" des Zwischenprodukts erfolgt zur Anpassung der Brechzahl oder zur Beeinflussung andere Materialeigenschaften wie Spannungsdoppelbrechung, Photosensitivität und Photodegradation. Das Dotieren während der thermischen Behandlung umfasst eine Behandlung bei einer Temperatur im Bereich von 400 bis 1100 °C insbesondere unter chlorhaltiger, fluorhaltiger, borhaltiger, phosphorhaltiger und/oder germaniumhaltiger Atmosphäre.

### Granulate

Man kann zwischen Aufbaugranulation und Pressgranulation und verfahrenstechnisch zwischen Nass- und Trocken-Granulierverfahren unterscheiden. Bekannte Methoden sind Rollgranulation in einem Granulierteller, Sprühgranulation, Frostgranuation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung.

Beim Granulieren bilden sich durch Zusammenlagerungen der SiO₂-Primär-teilchen diskrete, größere Agglomerate, die hier als "SiO₂-Granulatteilchen" oder kurz "Granulatteilchen" bezeichnet werden. In ihrer Gesamtheit bilden die Granulatteilchen ein "SiO₂-Granulat".

### Vakuum / Unterdruck

Das Zwischenprodukt kann unter "Vakuum" erhitzt werden. Der Unterdruck wird als absoluter Gasdruck angegeben. Unter Vakuum wird ein absoluter Gasdruck von weniger als 50 mbar verstanden.

### Viskosität

Die Messung der "Viskosität" des Quarzglases erfolgt mittels Balkenbiegeviskosimeter. Die Balkenbiegeviskosimetrie deckt einen Viskositätsbereich von 10⁸ bis 10¹⁵ dPa·s ab. Der Messaufbau umfasst eine beheizbare Dreipunktbiegevorrichtung mit einem Messbalken aus dem zu messenden Quarzglas (Balken/Streifen: 50mm lang, 3mm hoch, 5mm breit). Die Messgröße ist die Durchbiegegeschwindigkeit bei der jeweiligen Temperatur. Für undotiertes Quarzglas liegen typische Viskositätswerte bei einer Temperatur von 1280°C um 10^{12,1} dPa·s und bei 1133°C um 10^{11,3} dPa·s.

### Erweichungstemperatur

Bekanntermaßen kann Gläsern keine scharfe Erweichungstemperatur zugeordnet werden, sondern eher ein Erweichungstemperaturbereich. Zwecks Festlegung eines Temperaturwertes wird vorliegend auf die Bestimmung nach DIN ISO 7884 (1998) Bezug genommen, gemäß der die Erweichungstemperatur als diejenige Temperatur definiert ist, bei der das Glas eine Viskosität von 10^{7,6} dPas aufweist. Für die Erweichungstemperatur von undotiertem Quarzglas werden in der Literatur Temperaturwerte im Bereich von 1600°C bis 1730°C genannt.

### Zwischenprodukt

Das Zwischenprodukt kann als Schüttung aus Partikeln oder aus einem Granulat eines SiO₂-haltigen Rohstoffs vorliegen. Oder es ist ein poröser Körper aus SiO₂-Ruß (auch als SiO₂-Sootkörperbekannt) oder ein mechanisch oder thermisch vorverdichteter Presskörper (Pressling), Sinterkörper oder ein Grünkörper. Das in körperlicher Form ausgebildete Zwischenprodukt besteht aus einem Teil oder es ist aus mehreren Teilen zusammengesetzt, die beispielsweise stapelweise angeordnet sind. Das Zwischenprodukt enthält Hohlräume, ist gasdurchlässig und durch thermische Behandlung veränderbar und weiter verdichtbar, insbesondere durch Sintern oder Verglasen. Durch Sintern oder Verglasen des Zwischenprodukts wird das Glasbauteil erhalten, das mindestens bereichsweise aus dem dotierten SiO₂ besteht.

### Inkreis / Umkreis

Als "Inkreis" wird der größte Kreis bezeichnet, der vollständig innerhalb einer gegebenen Innenkontur liegt. Als "Umkreis" wird der kleinste Kreis bezeichnet, der vollständig außerhalb einer gegebenen Außenkontur liegt.

### Ausführungsbeispiel

Nachfolgend wird die Erfindung anhand eines Ausführungsbeispiels und einer Zeichnung näher beschrieben. Dabei zeigt in schematischer Darstellung
- **Figur 1**: ein Ausführungsbeispiel für einen Hüllrohr-Aufbau in einer Seitenansicht,
- **Figur 2**: ein Fixierrohr für den Hüllrohr-Aufbau von Figur 1 in vergrößerter Darstellung und in einer Ansicht auf den radialen Querschnitt,
- **Figur 3**: eine andere Ausführungsform eines Fixierrohres im radialen Querschnitt,
- **Figur 4**: eine weitere Ausführungsform eines Fixierrohres im radialen Querschnitt,
- **Figur 5**: eine weitere Ausführungsform eines Fixierrohres im radialen Querschnitt, und
- **Figur 6**: ein weiteres Ausführungsbeispiel für einen Hüllrohr-Aufbau in einer Seitenansicht mit einer alternativen Spannvorrichtung.

### Herstellung eines porösen Zwischenprodukts aus dotiertem Quarzglas

In an und für sich bekannter Weise wird ein Schlicker aus diskreten, synthetisch erzeugten SiO₂-Partikeln mit einer mittleren Teilchengröße um 10 µm in Reinstwasser hergestellt. Eine Menge von 285,7 g des Schlickers mit einer Restfeuchte von 37,4% wird mit 1000 ml Reinstwasser verdünnt. Durch Zugabe einer konzentrierten Ammoniaklösung in einer Menge von 75 ml wird ein pH-Wert von 10 eingestellt.

Zur Herstellung eines mit Yb₂O₃ und Al₂O₃ dotierten Quarzglases wird parallel eine wässrige Dotierstofflösung aus AlCl₃ und YbCl₃ (Molverhältnis 4:1) in 400 ml Reinstwasser erzeugt und durch einen 25 µm-Membranfilter abfiltriert. Anstelle der Chloride können auch andere Ausgangssubstanzen eingesetzt werden, wie beispielsweise organische Verbindungen, Nitride oder Fluoride.

Der durch Rühren bewegten Suspension wird die Dotierstofflösung in Form eines Sprühnebels während einer Dauer von 65 Minuten zugeführt. Zur Erzeugung des Sprühnebels wird die Dotierstofflösung mittels einer Sprühdüse zerstäubt, wobei ein Arbeitsdruck von 2 bar und eine Durchflussrate von 0,8 l/h eingestellt wird. Der so erzeugte Sprühnebel enthält Tropfen mit einem mittleren Durchmesser zwischen 10 µm und 40 µm. Aufgrund des hohen pH-Wertes der Suspension kommt es unmittelbar zu einer Mischfällung von Hydroxiden und Oxiden der beiden Dotierstoffe in Form von Al(OH)₃ und Yb(OH)₃. Die so gebildeten Feststoffteilchen adsorbieren an den vorhandenen Oberflächen der SiO₂-Teilchen und werden dadurch immobilisiert, so dass eine Koagulation der Feststoffteilchen oder eine Sedimentation verhindert wird. Auf diese Weise wird in dem Schlicker eine Dotierstoffkonzentration von 2 mol-% AI und 0,5 mol-% Yb (bezogen auf den Si-Gehalt der Suspension) eingestellt. Anschließend wird der mit den Dotierstoffen versetzte Schlicker weitere 2 Stunden lang durch Rühren homogenisiert. Mit dieser Vorgehensweise ist gewährleistet, dass ein optimal homogen dotierter SiO₂-Schlicker erhalten wird.

Der dotierte SiO₂-Schlicker wird eingefroren und durch sogenannte Frostgranulation zu einem Granulat weiterverarbeitet. Dabei wird der nach dem Auftauen erhaltene Granulatschlamm mehrmals mit Reinstwasser gewaschen und das überschüssige Wasser jeweils abdekantiert.

Anschließend wird der von Ammoniak befreite und gereinigte Granulatschlamm bei einer Temperatur um 400°C 6 Stunden lang getrocknet. Das getrocknete Granulat wird in eine Kunststoffform eingeschweißt und bei 400 bar isostatisch gepresst. Es wird ein Pressling erhalten (im Folgenden auch als "Granulat-Pressling" bezeichnet).

### Abdrehen des Presslings

Die Länge eines Presslings liegt typischerweise zwischen 70 bis 150 mm. Die Außenmantelfläche des Granulat-Presslings wird mit einem Drehmeißel spanend bearbeitet, bis ein vorgegebener Außendurchmesser erreicht ist. Dieser wird an den Innendurchmesser des Hüllrohres mit einem Spaltmaß von 0,3 bis 0,5 mm angepasst. Außerdem werden die Stirnflächen des Presslings bearbeitet, so dass diese planparallel sind.

Der mechanisch bearbeitete Pressling hat Zylinderform mit einem Durchmesser von 29,5mm und einer Länge von 100 mm. Seine mittlere Dichte beträgt etwa 40-50 % der nominalen Dichte des vollständig verdichteten dotierten Quarzglases. Er wird als Zwischenprodukt in einem modifizierten Behandlungs- und Verglasungsprozess im Hüllrohr thermisch behandelt und zu einem Bauteil aus dotiertem, transparentem Quarzglas erschmolzen.

### Einbau in ein Hüllrohr

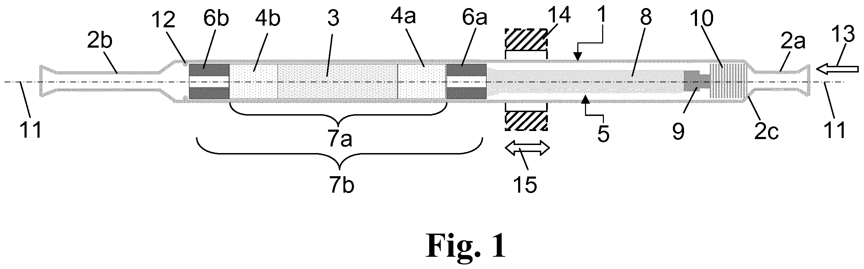

Der Hüllrohraufbau wird nachfolgend an einem Beispiel und **Figur 1** näher erläutert. Der schematisch gezeigte Hüllrohraufbau umfasst ein Hüllrohr 1 aus Quarzglas mit kreisrundem Innenquerschnitt und einem Innendurchmesser von 30,0 mm und einer Wandstärke von 2 mm. An dessen beide stirnseitige Enden sind ein erstes Halterohr 2a und ein zweites Halterohr 2b angeschmolzen. Beide Halterohre 2a, 2b haben einen kleineren Innendurchmesser als das Hüllrohr 1, so dass die jeweiligen Übergänge vom Hüllrohr 1 zu den Halterohren 2a; 2b eine Verengung des Innendurchmessers 2c bilden.

Innerhalb der Hüllrohr-Innenbohrung 5 sind koaxial zur horizontal orientierten Hüllrohr-Längsachse 11 folgende Innen-Komponenten angeordnet:
- Ein thermisch zu behandelnder, gasdurchlässiger Pressling 3 aus dem dotiertem SiO₂-Rohstoff. Der Pressling 3 hat Zylinderform mit planen Stirnseiten und einem gegenüber dem Hüllrohr-Innendurchmesser geringfügig kleineren Außendurchmesser von 29,5 mm.
- Beiderseits zum Pressling 3 ist jeweils ein als Gasdiffusor wirkender, gasdurchlässiger Dummy-Pressling 4a, 4b aus undotiertem SiO₂ angeordnet. Die Dummy-Pressling 4a, 4b werden in ähnlicher Art wie der Pressling durch isostatisches Pressen von Granulat aus undotiertem SiO₂-in einer Kunststoffform erhalten. Ihre Porosität entspricht der des Granulat-Presslings; die mittlere Dichte liegt zwischen 0,9 und 1,0 g/cm³ (also etwa 40-45 % der nominalen Dichte von Quarzglas mit 2,21 g/cm³). Die Dummy-Presslinge 4a, 4b haben ebenfalls Zylinderform und beiderseits plane Stirnseiten. Sie schließen den zu behandelnden Pressling 3 sandwichartig ein (Sandwich-Gruppierung 7a).
   Ihr anfänglicher Außendurchmesser beträgt ebenfalls 29,5 mm. Dieser Außendurchmesser ist im Hinblick auf eine möglichst effektive und gleichmäßige Gasverteilung und Schutz vor Materialverlust aus dem Pressling ausgelegt. Das poröse undotierte SiO₂ der Dummy-Presslinge 4a, 4b wird bei der thermischen Behandlung und insbesondere beim Verglasen weiter verdichtet, jedoch ist die Schrumpfung etwas geringer als beim Pressling 3, so dass der Außendurchmesser nach dem Verglasen etwas größer ist als der Außendurchmesser des zu erzeugenden Rohlings.
   Bei einer alternativen Verfahrensweise ist der anfängliche Außendurchmesser der beiden Dummy-Presslinge 4a, 4b so ausgelegt, dass er nach dem Verglasen etwa dem Außendurchmesser des zu erzeugenden Rohlings entspricht. Dabei beträgt der anfängliche Außendurchmesser der beiden Dummy-Presslinge 4a, 4betwa 25 mm.
- Jeweils ein Fixierrohr 6a, 6b beiderseits der Sandwich-Gruppierung 7a aus Pressling 3 und Dummy-Presslingen 4a, 4b. Die Fixierrohre 6a, 6b bestehen aus nicht dotiertem und nicht porösem Quarzglas (mit der nominalen Dichte um 2,21 g/cm³). Sie haben eine mittig verlaufende Durchgangsbohrung mit einem Innendurchmesser von 14 mm und einen Außendurchmesser, der dem anfänglichen Außendurchmesser des Presslings 3 entspricht, also 29,5 mm s im Ausführungsbeispiel. Auch bei den Fixierrohren 6a, 6b sind beide Stirnseiten plan. Die beiden Fixierrohre 6a, 6b schließen die Sandwich-Gruppierung 7a nach außen hin ab und bilden mit dieser zusammen eine stumpfstoßweise Anordnung 7b der Innen-Komponenten 3; 4a; 4b; 6a und 6b.
   Die Innenbohrung der Fixierrohre 6a, 6b kollabiert beim Verglasen nur in dem jeweils an den Dummy-Pressling 4a; 4b zugewandten Endabschnitt, so dass sich dort ein Außendurchmesser von etwa 25,5 mm einstellt. Ansonsten bleiben die Innenbohrung und damit auch der anfängliche Außendurchmesser der Fixierrohe 6a, 6b erhalten.
- Eine innere Pfeife 8 mit einem Außendurchmesser, der kleiner ist als der Hüllrohr-Innendurchmesser, die mit einem Ende an der freien Stirnseite des Fixierrohres 6a ansetzt und deren gegenüberliegendes Ende mit einem Normschliff 9 versehen ist.
- Ein mit einer Druckfeder versehener Faltenbalg 10 aus PTFE, der über den Normschliff 9 mit der inneren Pfeife 8 verbunden ist und auf diese einwirkt.

Zum Erhitzen beim Reinigen, Dotieren, Sintern oder Verglasen des Presslings 3 ist ein elektrisch beheizter Ringofen 14 vorgesehen, der reversierend entlang der Längsachse 11 verfahrbar ist, wie vom Richtungspfeil 15 angedeutet.

Der gesamte Hüllrohr-Innenaufbau mit den Innen-Komponenten 3; 4a; 4b; 6a, 6b; 8; 9 und 10 ist in Bezug auf die Längsachse 11 axialsymmetrisch und gasdurchlässig für ein einströmendes Behandlungsgas (angedeutet durch den Richtungspfeil 13).

Der Hüllrohr-Innenaufbau wird beispielsweise durch folgende Arbeitsschritte angefertigt:
Schritt 1: Das einseitig am Halterohr 2a angesetzte Hüllrohr 1 wird im Drei-BackenFutter einer Glasdrehbank eingespannt. Das andere Ende des Hüllrohres 1 ist im Arbeitsbereich der Glasdrehbank weiter frei zugänglich.
Schritt 2: In die Innenbohrung 5 werden die Innen-Komponenten in folgender Reihenfolge in das Hüllrohr 1 eingeführt: Der Faltenbalg 10, die zuvor über die Schliffverbindung 9 miteinander verbundene innere Pfeife 8, das erste (rechte) Fixierrohr 6a, der erste (rechte) Dummy-Pressling 4a, der thermisch zu behandelnde Pressling 3, der zweite (linke) Dummy-Pressling 4b, und das linke (zweite) Fixierrohr 6b.
Schritt 3: Die Innen-Komponenten werden in das Hüllrohr 1 hineingeschoben, so dass der Faltenbalg 10 an der Durchmesserverengung 2c des Hüllrohres 1 zum Halterohr 2a anliegt und möglichst weitgehend komprimiert, also gespannt wird. Bei gespanntem Faltenbalg 10 wird hinter dem zuletzt eingebauten Fixierrohr 6b das Hüllrohr 1 punktuell mit einem Handbrenner erwärmt und an drei um den Umfang verteilten Stellen eingedrückt, um in die Hüllrohr-Innenbohrung 4 hineinragende Noppen 12 zu erzeugen, die als Widerlager für das Fixierrohr 6b dienen.
Schritt 4: Anschließend wird das linke Halterohr 2b mittels Handbrenner bei laufender Rotation um die Längsachse 11 an das Hüllrohr angesetzt.

### Thermische Behandlung des mechanisch bearbeiteten Presslings im Hüllrohr

Der Granulat-Pressling 3 wird unter Heliumspülung aufgeheizt und danach etwa 8 Stunden lang in chlorhaltiger Atmosphäre bei etwa 900 °C behandelt. Das chlorhaltige Behandlungsgas wird in einem Gasflussvolumen von 35 sccm Cl₂ und 15 sccm He über das Halterohr 2a in das Hüllrohr 1 eingeleitet (in Richtung des Pfeils 13). Gleichzeitig wird von der gegenüberliegenden Seite Gas abgesaugt und dadurch in der Hüllrohr-Innenbohrung ein Unterdruck von etwa 200 mbar (Absolutdruck) erzeugt. Dadurch wird ein Einsaugen des Behandlungsgases in die Poren des Presslings 3 und ein besseres Durchspülen erreicht.

Dadurch, dass der Pressling mit einer "Passung" im Hüllrohr 1 sitzt, ergeben sich Gasströmungsbedingungen, bei denen bevorzugte Strömungspfade um den Außenumfang herum sowie Totbereiche mit geringer Beaufschlagung mit dem reaktiven Gas minimiert sind. Die Reinigungsbehandlung des Presslings 3 ist daher über sein Volumen homogen und in seiner Wirkung reproduzierbar. Bei dieser Reinigungsbehandlung werden Verunreinigungen aus dem Pressling 3 entfernt und der Hydroxylgruppengehalt wird auf weniger als 10 Gew.-ppm reduziert.

Der gereinigte Pressling 3 wird anschließend einem Hüllrohr-Verglasungsprozess unterzogen. Dabei wird der Ringofen 14 auf eine Temperatur auf eine Temperatur von 1250 °C aufgeheizt und in mehreren Hüben mit einer Transversalgeschwindigkeit von 10 mm/min entlang des Presslings 3 hin- und herbewegt. Gleichzeitig wird von beiden Halterohren 1a; 2b ein Vakuum an das Hüllrohr 1 angelegt. Die reversierende Bewegung endet beiderseits etwa in der Längenmitte des jeweiligen Fixierrohres 6a; 6b.

Da der Pressling 3 eine vergleichsweise geringe Dichte von etwa 45% der regulären Dichte von Quarzglas aufweist, findet während der Verglasung eine Verdichtung und damit einhergehend eine deutliche Verringerung des Volumens statt. Durch diese Kontraktion entstehen Spalten im inneren Aufbau des Hüllrohres 1, was zu Gaseinschlüssen und undefiniertem Kollabieren des Hüllrohres 1 führen kann. Diese Effekte werden durch den oben erläuterten Hüllrohraufbau verhindert oder vermindert. Dabei bewirkt die Spannvorrichtung, dass die Innen-Komponenten 3; 4a; 4b; 6a und 6b, die zusammen eine stumpfstoßweise Anordnung 7b bilden, durch einen longitudinalen Druck stoßweise aneinander sitzen. Dieser Druck wird durch den Faltenbalg 10 aus PTFE ausgeübt und über die innere Pfeife 8 (ein Quarzglasrohr mit Normschliff 9 zur Verbindung mit dem Faltenbalg 10) an die besagten Innen-Komponenten weitergegeben. Der Faltenbalg ist für eine maximale Auslenkung von etwa 2 cm und mit einer Federkonstante von 700N/m ausgelegt. Die innere Pfeife 8 ist so lang, dass der Faltenbalg 10 vom Ringofen 14 entfernt bleibt, so dass er sich während des Verglasens nicht übermäßig erhitzt. Der Faltenbalg 10 fungiert hier als Feder und wird gespannt eingebaut, sodass bei der angesprochenen Kontraktion des Presslings 3 ein Nachschieben und somit ein durch den Verglasungsprozess selbst gesteuerter Ausgleich der Spalten stattfinden kann. Gleichzeitig wird am gegenüberliegenden Ende der Hüllrohr-Innenbohrung ein Unterdruck von 25 mbar (Absolutdruck) angelegt.

Beim Verglasen wird der Pressling 3 zu blasenfreiem seltenerdmetalldotierten Quarzglas verdichtet. Gleichzeitig kollabiert das Hüllrohr 1 auf den verdichteten Granulat-Pressling 3 und auf die ihn unmittelbar umgebenden Dummy-Presslinge 4a; 4b sowie teilweise auf die Fixierrohre 6a; 6bauf. Das Volumen der Dummy-Presslinge 4a; 4b und der Fixierrohre 6a; 6b nimmt infolge des Verglasens ebenfalls ab.

Nach Abschluss der Hüllrohrverglasung wird der erhaltene Rohling beiderseits des vormaligen Presslings 3 im Bereich der vormaligen Dummy-Presslinge 4a; 4b abgesägt. Es wird eine Vorform mit einem Außendurchmesser von 24 mm erhalten, die einen zylinderförmigen Kern mit einem Durchmesser von etwa 20 mm aus dem seltenerdmetalldotierten Quarzglas und einen Mantel aus dem darauf aufkollabierten Hüllrohrmaterial enthält. Der Rohling wird zu einer Vorform weiterverarbeitet. Diese Weiterverarbeitung kann beispielsweise ein Abschleifen des Hüllrohr-Materials, eine thermisch-mechanische Homogenisierung des erhaltenen abgeschliffenen Kernstabs zur Auflösung von Defekten (wie zum Beispiel Kristalliten), sowie eine Ummantelung des homogenisierten Kernstabs mit einem Mantelrohr umfassen. Es wird eine Laserfaser-Vorform erhalten, die im letzten Schritt zu einer Faser verzogen wird.

Die anfänglichen Außendurchmesser (D₀) der Hüllrohr-Innenkomponenten: Granulat-Pressling 1, Dummy-Presslinge 4a; 4b und Fixierrohre 6a; 6b können in Abhängigkeit von der beim Hüllrohrverglasen zu erwartenden Schwindung so ausgelegt sein, dass sich nach Abschluss des Verglasungsvorgangs möglichst gleiche finale Außendurchmesser (D_{f}) und damit eine möglichst bündige Anordnung der genannten Innenkomponenten ergibt. Im vorliegenden Ausführungsbeispiel sind die Außendurchmesser der Hüllrohr-Innenkomponenten jedoch auf eine möglichst effektive Gasverteilung im Behandlungsprozess und damit auf eine anfänglich weitgehende Auffüllung des Innendurchmessers der Hüllrohr-Innenbohrung ausgelegt. In der folgenden Tabelle 1 sind entsprechende Angaben zu den Innenkomponenten zusammengefasst.

### Tabelle 1

| | **Pressling** | **Dummy-Pressling** | **Fixierrohr** |
|---|---|---|---|
| **Werkstoff** | Yb₂O₃, Al₂O₃, SiO₂ | SiO₂ | SiO₂ |
| **D₀ [mm]** | 29,5 | 29,5 | 29,5 |
| **D_{f} [mm]** | 20 | 21 | 26 |

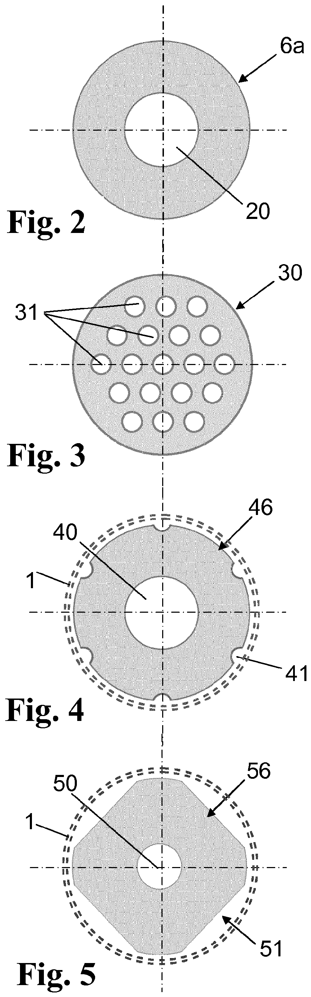

**Figur 2** zeigt schematisch eine vergrößerte Darstellung des Fixierrohres 6a mit der mittig verlaufenden Innenbohrung 20 in einer Ansicht auf den radialen Querschnitt.

Das Fixierrohr 6a hat eine dem Pressling zugewandte plane Stirnseite, auf der mehrere Schlitze eingefräst sind, die sich radial von der Innenbohrung bis zur Zylindermantelfläche erstrecken. Die Schlitze 21 bewirken eine optimierte Führung der Behandlungsgase.

Die in **Figur 3** schematisch gezeigte Ausführungsform eines Fixierrohres 30 ist als Quarzglaszylinder mit einer Vielzahl kleiner Durchgangsbohrungen 31 ausgeführt.

Das Fixierrohr 30 wirkt als ein dem Dummy-Pressling vorgelagertes Gasverteilelement, mit dem sich das Behandlungsgas gleichmäßig vor dem Dummy-Pressling verteilen lassen. Je kleiner und zahlreicher die Durchgangsbohrungen 31 sind, umso effektiver ist die Gasverteilung. Im Extremfall sind die Durchgangsbohrungen als Mikrokanäle oder Kapillare ausgeführt, in denen sich ein gewisser Staudruck aufbaut.

Die Ausführungsform des Fixierrohres 46 von **Figur 4** verfügt sowohl über eine mittig verlaufende Innenbohrung 40, als auch über mehrere über den Außenumfang verteilte Rillen 41 in der Zylindermantelfläche, die in Verbindung mit dem Hüllrohr 1 zusätzliche durchgehende Gaskanäle bilden.

Bei der Ausführungsform des Fixierrohres 56 von **Figur 5** ist ebenfalls eine mittig verlaufende Innenbohrung 50 vorgesehen. Außerdem ist der Zylindermantelfläche an vier gleichmäßig um den Außenumfang verteilten Bereichen abgeflacht. Die Abflachungen 51 bilden ebenfalls in Verbindung mit dem Hüllrohr 1 zusätzliche durchgehende Gaskanäle.

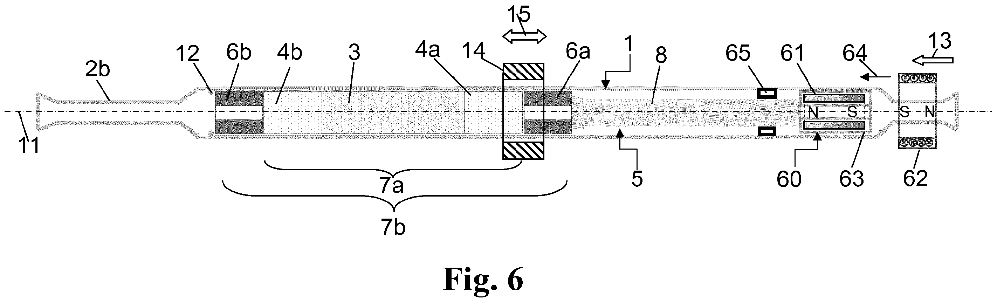

**Figur 6** zeigt einen alternativen Hüllrohraufbau in schematischer Darstellung. Sofern gleiche Bezugsziffern wie in Figur 1 verwendet sind, so bezeichnen diese identische oder äquivalente Bauteile wie sie oben beim Hüllrohraufbau anhand Figur 1 erläutert sind. Der einzige Unterschied liegt in der Spannvorrichtung, die anstelle eines Faltenbalgs (10 in Figur 1) einen in der Hüllrohr-Innenbohrung verschiebbaren Schieber 60 mit einem Magnetelement 61 aus einem magnetischen Werkstoff umfasst, und eine in Längsachsenrichtung 11 bewegbare stromdurchflossene Spule 62, über das Hüllrohr 1 und entlang dessen Längsachse 11 verschiebbar ist.

Das Magnetelement 61 ist ein ringförmiger Dauermagnet, der in ein doppelwandiges Quarzglasrohr 63 eingeschweißt ist. Der Schieber 60 mitsamt dem darin fixierten Ringmagneten ist mittels der Spule 62 wie anhand der Richtungspfeile 64 angedeutet gegen das eine Ende der Pfeife 8 verschiebbar und presst diese gegen das stirnseitige Ende des Fixierungsrohres 6a. Für die axiale Führung der Pfeife sind mehrere Abstandshalter 65 um den Innenumfang des Hüllrohres 1 verteilt. Zwischen dem Schieber 60 und der Innenwandung des Hüllrohres 1 verbleibt ein Ringspalt von etwa 3 mm, so dass der Gasfluss durch das Hüllrohr nicht nennenswert beeinträchtigt wird.

## Patentansprüche

1. Verfahren zur Herstellung eines Glasbauteils, das mindestens teilweise aus dotiertem, insbesondere aus seltenerdmetalldotiertem SiO₂ besteht, umfassend folgende Verfahrensschritte:
(a) Bereitstellen eines Hohlräume enthaltenden Zwischenprodukts (3), das dotiertes SiO₂ enthält,
(b) Einbringen des Zwischenprodukts (3) in ein Hüllrohr (1) aus Glas, das eine Längsachse (11) und eine Innenbohrung (5) aufweist, und
(c) thermische Behandlung des Zwischenprodukts (3) im Hüllrohr (1),
wobei in die Hüllrohr-Innenbohrung (5) ein erster gasdurchlässiger Gasdiffusor (4a) eingesetzt wird, der entlang der Hüllrohr-Längsachse (11) verschiebbar ist und der bei der thermischen Behandlung gegen das Zwischenprodukt (3) gepresst wird, wobei mittels einer Spannvorrichtung (8; 9; 10; 60; 61, 62; 63) eine Presskraft erzeugt wird, die einen Vordruck auf den ersten Gasdiffusor (4a) ausübt, wobei die Spannvorrichtung (8; 9; 10; 60; 61; 62; 63) ein in der Hüllrohr-Innenbohrung (5) eingesetztes elastisch verformbares Federelement oder einen in der Hüllrohr-Innenbohrung (5) verschiebbaren Schieber (61; 63) mit einem ersten Magnetelement (61) aus einem magnetischen Werkstoff, und eine in Längsachsenrichtung (11) außerhalb der Hüllrohr-Innenbohrung (5) bewegbares und auf das Magnetelement (61) einwirkendes zweites Magnetelement umfasst.

2. Verfahren nach Anspruch 1, **dadurch gekennzeichnet, dass** der erste Gasdiffusor (4a) aus einem porösen Glas besteht, das dieselbe und besonders bevorzugt eine höhere Viskosität hat als das dotierte oder nicht dotierte SiO₂.

3. Verfahren nach einem der vorhergehenden Ansprüche, **dadurch gekennzeichnet, dass** das Zwischenprodukt (3) als Sootkörper, Sinterkörper oder Pressling ausgebildet ist und eine Außenquerschnittsform hat, die eine Innenquerschnittsform des Hüllrohres (1) unter Belassung eines Spaltes mit einer Spaltbreite von maximal 1 mm ausfüllt.

4. Verfahren nach einem der vorhergehenden Ansprüche, **dadurch gekennzeichnet, dass** das Zwischenprodukt (3) zwischen dem ersten Gasdiffusor (4a) und einem zweiten gasdurchlässigen Gasdiffusor (4b) angeordnet ist.

5. Verfahren nach Anspruch 4, **dadurch gekennzeichnet, dass** der erste Gasdiffusor (4a) und der zweite Gasdiffusor (4b) zylinderförmig ausgeführt sind und jeweils eine am Zwischenprodukt (3) anliegende plane Stirnseite haben.

6. Verfahren nach einem der vorhergehenden Ansprüche, **dadurch gekennzeichnet, dass** in die Hüllrohr-Innenbohrung (5) ein erstes Fixierungselement (6a) eingesetzt wird, in dem oder an dem mindestens ein durchgehender Gaskanal (20; 41; 51) ausgebildet ist und das entlang der Hüllrohr-Längsachse (11) verschoben und gegen den ersten Gasdiffusor (4a) gepresst wird.

7. Verfahren nach Anspruch 6, **dadurch gekennzeichnet, dass** das erste Fixierungselement (6a) aus einem gasdichten Werkstoff besteht, und vorzugsweise aus synthetisch erzeugten Rohstoffen hergestelltem Quarzglas.

8. Verfahren nach einem der Ansprüche 4 und 5 und einem der Ansprüche 6 oder 7, **dadurch gekennzeichnet, dass** das erste Fixierungselement (6a) in Strömungsrichtung (13) eines Behandlungsgases gesehen dem ersten Gasdiffusor (4a) vorgeordnet ist, und dass ein zweites Fixierungselement (6b) in der Strömungsrichtung (13) dem zweiten Gasdiffusor (4b) nachgeordnet ist und an diesem anliegt, wobei bevorzugt das erste Fixierungselement (6a), der erste Gasdiffusor (4a), das zu behandelnde Zwischenprodukt (3), der zweite Gasdiffusor (4b) und das zweite Fixierungselement (6b) in dieser Reihenfolge stoßweise aneinander liegen.

9. Verfahren nach Anspruch 1, **dadurch gekennzeichnet, dass** das elastisch verformbare Federelement einen Faltenbalg (10) umfasst.

10. Verfahren nach einem der vorhergehenden Ansprüche, **dadurch gekennzeichnet, dass** an einem Hüllrohr-Ende (1b) ein Unterdruck in der Hüllrohr-Innenbohrung angelegt wird und/oder an einem gegenüberliegenden Hüllrohr-Ende (1a) ein Behandlungsgas (13) in das Hüllrohr (1) eingeleitet wird.

11. Verfahren nach einem der vorhergehenden Ansprüche, **dadurch gekennzeichnet, dass** das Zwischenprodukt (3) zur thermischen Behandlung in einem elektrisch beheizten Ringofen (14) erhitzt wird.

12. Vorrichtung zur Herstellung eines Glasbauteils, umfassend ein Hüllrohr (1) aus Glas zur Aufnahme eines Hohlräume enthaltenden Zwischenprodukts (3) und einen elektrisch beheizbaren Ringofen (14) zum Erhitzen des Zwischenprodukts (3), wobei das Hüllrohr (1) eine Längsachse (11) und eine Innenbohrung (5) aufweist, **dadurch gekennzeichnet, dass** in die Hüllrohr-Innenbohrung (5) ein erster gasdurchlässiger Gasdiffusor (4a) eingesetzt ist, der entlang der Hüllrohr-Längsachse (11) gegen das Zwischenprodukt (3) verschiebbar ist, wobei in die Hüllrohr-Innenbohrung (5) eine Spannvorrichtung (8; 9; 10; 61; 62; 63) eingesetzt ist, die einen Vordruck auf den ersten Gasdiffusor (4a) ausübt, wobei die Spannvorrichtung (8; 9; 10; 60; 61, 62; 63) ein in der Hüllrohr-Innenbohrung (5) eingesetztes elastisch verformbares Federelement oder einen in der Hüllrohr-Innenbohrung (5) verschiebbaren Schieber (61; 63) mit einem ersten Magnetelement (61) aus einem magnetischen Werkstoff, und eine in Längsachsenrichtung (11) außerhalb der Hüllrohr-Innenbohrung (5) bewegbares und auf das Magnetelement (61) einwirkendes zweites Magnetelement umfasst.

13. Vorrichtung nach Anspruch 12, **dadurch gekennzeichnet, dass** in die Hüllrohr-Innenbohrung (5) ein erstes Fixierungselement (6a) eingesetzt ist, das entlang der Hüllrohr-Längsachse (11) verschiebbar ist und das gegen den ersten Gasdiffusor (4a) presst, und in dem oder an dem mindestens ein durchgehender Gaskanal (20; 41, 51) ausgebildet ist.

## Claims

1. A method for producing a glass component which consists at least in part of doped, in particular rare-earth-doped SiO₂, comprising the following method steps:
(a) providing a cavity-containing intermediate product (3) that contains doped SiO₂,
(b) introducing the intermediate product (3) into a sheath (1) made of glass, which sheath comprises a longitudinal axis (11) and an inner bore (5), and
(c) thermally treating the intermediate product (3) in the sheath (1),
wherein a first gas-permeable gas diffuser (4a) is inserted into the sheath inner bore (5), which gas diffuser is displaceable along the sheath longitudinal axis (11) and is pressed against the intermediate product (3) during thermal treatment, wherein a pressing force is generated by means of a clamping device (8; 9; 10; 60; 61, 62; 63), which exerts a pre-pressure on the first gas diffuser (4a), wherein the clamping device (8; 9; 10; 60; 61; 62; 63) comprises an elastically deformable spring element inserted in the sheath inner bore (5) or a slide (61; 63), which is displaceable in the sheath inner bore (5) and has a first magnet element (61) made of a magnetic material, and a second magnetic element, which is movable in the longitudinal axis direction (11) outside the sheath inner bore (5) and acts on the magnet element (61).

2. The method according to claim 1, **characterized in that** the first gas diffuser (4a) consists of a porous glass which has the same and particularly preferably a higher viscosity than the doped or non-doped SiOz.

3. The method according to either of the preceding claims, **characterized in that** the intermediate product (3) is designed as a soot body, sintered body or pressed part and has an outer cross-sectional shape which fills an inner cross-sectional shape of the sheath (1) while leaving a gap with a maximum gap width of 1 mm.

4. The method according to any of the preceding claims, **characterized in that** the intermediate product (3) is arranged between the first gas diffuser (4a) and a second gas-permeable gas diffuser (4b).

5. The method according to claim 4, **characterized in that** the first gas diffuser (4a) and the second gas diffuser (4b) are cylindrical and each have a flat end face abutting the intermediate product (3).

6. The method according to any of the preceding claims, **characterized in that** a first fixing element (6a) is inserted into the sheath inner bore (5), in which or on which fixing element at least one continuous gas channel (20; 41; 51) is formed and which is displaced along the sheath longitudinal axis (11) and pressed against the first gas diffuser (4a).

7. The method according to claim 6, **characterized in that** the first fixing element (6a) consists of a gas-tight material, and preferably consists of quartz glass made of synthetically produced raw materials.

8. The method according to either of claims 4 and 5 and either of claims 6 or 7, **characterized in that** the first fixing element (6a) is arranged upstream of the first gas diffuser (4a) in the flow direction (13) of a treatment gas, **and in that** a second fixing element (6b) is arranged downstream of the second gas diffuser (4b) in the flow direction (13) and abuts said gas diffuser, with preferably the first fixing element (6a), the first gas diffuser (4a), the intermediate product (3) to be treated, the second gas diffuser (4b) and the second fixing element (6b) intermittently abutting one another in this order.

9. The method according to claim 1, **characterized in that** the elastically deformable spring element comprises a bellows (10).

10. The method according to any of the preceding claims, **characterized in that** a negative pressure is applied in the sheath inner bore at one sheath end (1b) and/or a treatment gas (13) is introduced into the sheath (1) at an opposite sheath end (1a).

11. The method according to any of the preceding claims, **characterized in that** the intermediate product (3) is heated in an electrically heated ring furnace (14) for thermal treatment.

12. A device for producing a glass component, comprising a sheath (1) made of glass for receiving a cavity-containing intermediate product (3) and an electrically heatable ring furnace (14) for heating the intermediate product (3), the sheath (1) comprising a longitudinal axis (11) and an inner bore (5), **characterized in that** a first gas-permeable gas diffuser (4a) is inserted into the sheath inner bore (5), which gas diffuser is displaceable along the sheath longitudinal axis (11) against the intermediate product (3), a clamping device (8; 9; 10; 61; 62; 63) being inserted into the sheath inner bore (5), which clamping device exerts a pre-pressure on the first gas diffuser (4a), the clamping device (8; 9; 10; 60; 61; 62; 63) comprising an elastically deformable spring element inserted in the sheath inner bore (5) or a slide (61; 63), which is displaceable in the sheath inner bore (5) and has a first magnet element (61) made of a magnetic material, and a second magnetic element, which is movable in the longitudinal axis direction (11) outside the sheath inner bore (5) and acts on the magnet element (61).

13. The device according to claim 12, **characterized in that** a first fixing element (6a) is inserted into the sheath inner bore (5), which fixing element is displaceable along the sheath longitudinal axis (11) and presses against the first gas diffuser (4a), and in which or on which at least one continuous gas channel (20; 41, 51) is formed.

## Revendications

1. Procédé permettant la fabrication d'un composant en verre qui est constitué au moins partiellement de SiOz dopé, en particulier dopé aux métaux de terres rares, comprenant les étapes de procédé suivantes :
(a) fourniture d'un produit intermédiaire (3) contenant des cavités, lequel contient du SiOz dopé,
(b) introduction du produit intermédiaire (3) dans un tuyau de gaine (1) en verre qui présente un axe longitudinal (11) et un alésage intérieur (5), et
(c) traitement thermique du produit intermédiaire (3) dans le tuyau de gaine (1), dans lequel un premier diffuseur de gaz (4a) perméable aux gaz est inséré dans l'alésage intérieur de tuyau de gaine (5), lequel premier diffuseur de gaz peut coulisser le long de l'axe longitudinal de tuyau de gaine (11) et est pressé contre le produit intermédiaire (3) lors du traitement thermique, dans lequel une force de pression est générée au moyen d'un dispositif de serrage (8 ; 9 ; 10 ; 60 ; 61 ; 62 ; 63), laquelle force de pression exerce une pression d'alimentation sur le premier diffuseur de gaz (4a), dans lequel le dispositif de serrage (8 ; 9 ; 10 ; 60 ; 61 ; 62 ; 63) comprend un élément élastique déformable élastiquement inséré dans l'alésage intérieur de tuyau de gaine (5) ou un coulisseau (61 ; 63) pouvant coulisser dans l'alésage intérieur de tuyau de gaine (5) et comportant un premier élément magnétique (61) en un matériau magnétique, et un second élément magnétique pouvant se déplacer dans la direction de l'axe longitudinal (11) en dehors de l'alésage intérieur de tuyau de gaine (5) et agissant sur l'élément magnétique (61).

2. Procédé selon la revendication 1, **caractérisé en ce que** le premier diffuseur de gaz (4a) est constitué d'un verre poreux qui possède la même viscosité et, de manière particulièrement préférée, une viscosité supérieure à celle du SiOz dopé ou non dopé.

3. Procédé selon l'une des revendications précédentes, **caractérisé en ce que** le produit intermédiaire (3) est réalisé sous forme de corps de suie, de corps fritté ou de pièce moulée et possède une forme de section transversale extérieure qui remplit une forme de section transversale intérieure du tuyau de gaine (1) en laissant un interstice d'une largeur d'interstice de 1 mm au maximum.

4. Procédé selon l'une des revendications précédentes, **caractérisé en ce que** le produit intermédiaire (3) est disposé entre le premier diffuseur de gaz (4a) et un second diffuseur de gaz (4b) perméable aux gaz.

5. Procédé selon la revendication 4, **caractérisé en ce que** le premier diffuseur de gaz (4a) et le second diffuseur de gaz (4b) sont conçus sous forme cylindrique et possèdent respectivement une face frontale plane adjacente au produit intermédiaire (3).

6. Procédé selon l'une des revendications précédentes, **caractérisé en ce qu'**un premier élément de fixation (6a) est inséré dans l'alésage intérieur de tuyau de gaine (5), dans ou sur lequel premier élément de fixation est réalisé au moins un canal de gaz (20 ; 41 ; 51) continu et lequel premier élément de fixation coulisse le long de l'axe longitudinal de tuyau de gaine (11) et est pressé contre le premier diffuseur de gaz (4a).

7. Procédé selon la revendication 6, **caractérisé en ce que** le premier élément de fixation (6a) est constitué d'un matériau étanche aux gaz, et de préférence de verre de quartz fabriqué à partir de matières premières produites synthétiquement.

8. Procédé selon l'une des revendications 4 et 5 et l'une des revendications 6 ou 7, **caractérisé en ce que** le premier élément de fixation (6a) est disposé en amont du premier diffuseur de gaz (4a), vu dans le sens d'écoulement (13) d'un gaz de traitement, **et en ce qu'**un second élément de fixation (6b) est disposé en aval du second diffuseur de gaz (4b) dans le sens d'écoulement (13) et s'appuie contre celui-ci, dans lequel de préférence le premier élément de fixation (6a), le premier diffuseur de gaz (4a), le produit intermédiaire (3) à traiter, le second diffuseur de gaz (4b) et le second élément de fixation (6b) sont disposés bout à bout dans cet ordre.

9. Procédé selon la revendication 1, **caractérisé en ce que** l'élément élastique déformable élastiquement comprend un soufflet plissé (10).

10. Procédé selon l'une des revendications précédentes, **caractérisé en ce qu'**une dépression est appliquée dans l'alésage intérieur de tuyau de gaine au niveau d'une extrémité de tuyau de gaine (1b) et/ou un gaz de traitement (13) est introduit dans le tuyau de gaine (1) au niveau d'une extrémité de tuyau de gaine (1a) opposée.

11. Procédé selon l'une des revendications précédentes, **caractérisé en ce que** le produit intermédiaire (3) est chauffé dans un four annulaire (14) chauffé électriquement pour le traitement thermique.

12. Dispositif permettant la fabrication d'un composant en verre, comprenant un tuyau de gaine (1) en verre permettant de recevoir un produit intermédiaire (3) contenant des cavités et un four annulaire (14) pouvant être chauffé électriquement pour le chauffage du produit intermédiaire (3), dans lequel le tuyau de gaine (1) présente un axe longitudinal (11) et un alésage intérieur (5), **caractérisé en ce qu'**un premier diffuseur de gaz (4a) perméable aux gaz est inséré dans l'alésage intérieur de tuyau de gaine (5), lequel premier diffuseur de gaz peut coulisser le long de l'axe longitudinal de tuyau de gaine (11) contre le produit intermédiaire (3), dans lequel un dispositif de serrage (8 ; 9 ; 10 ; 61 ; 62 ; 63) est inséré dans l'alésage intérieur de tuyau de gaine (5), lequel dispositif de serrage exerce une pression d'alimentation sur le premier diffuseur de gaz (4a), dans lequel le dispositif de serrage (8 ; 9 ; 10 ; 60 ; 61 ; 62 ; 63) comprend un élément élastique déformable élastiquement inséré dans l'alésage intérieur de tuyau de gaine (5) ou un coulisseau (61 ; 63) pouvant coulisser dans l'alésage intérieur de tuyau de gaine (5) et comportant un premier élément magnétique (61) en un matériau magnétique, et un second élément magnétique pouvant se déplacer dans la direction de l'axe longitudinal (11) en dehors de l'alésage intérieur de tuyau de gaine (5) et agissant sur l'élément magnétique (61).

13. Dispositif selon la revendication 12, **caractérisé en ce qu'**un premier élément de fixation (6a) est inséré dans l'alésage intérieur de tuyau de gaine (5), lequel premier élément de fixation peut coulisser le long de l'axe longitudinal de tuyau de gaine (11) et est pressé contre le premier diffuseur de gaz (4a) et dans ou sur lequel premier élément de fixation (6a) est réalisé au moins un canal de gaz (20 ; 41, 51) continu.
